(19) Europäisches Patentamt
European Patent Office
Office européen des brevets

(11) EP 0 590 461 B1

(12) **EUROPÄISCHE PATENTSCHRIFT**

(45) Veröffentlichungstag und Bekanntmachung des Hinweises auf die Patenterteilung:
**03.12.1997 Patentblatt 1997/49**

(21) Anmeldenummer: **93115099.9**

(22) Anmeldetag: **20.09.1993**

(51) Int Cl.$^{6}$: **C08J 5/18**, C08L 51/00, C08L 53/00, C08L 33/10, B32B 27/08, C09D 133/10, C08J 7/04, C09J 7/02 // (C08L33/10, 53:02)

(54) **Mehrschichtige heisssiegelfähige Kunststoff-Folien**

Multilayered heat-sealable plastic films

Feuilles multi couches thermoscellables

(84) Benannte Vertragsstaaten:
**AT BE CH DE DK ES FR GB IT LI NL SE**

(30) Priorität: **19.09.1992 DE 4231395**
**24.11.1992 DE 4241682**

(43) Veröffentlichungstag der Anmeldung:
**06.04.1994 Patentblatt 1994/14**

(73) Patentinhaber: **Röhm GmbH**
**64293 Darmstadt (DE)**

(72) Erfinder:
- **Maul, Jürgen, Dr.**
  **D-45772 Marl (DE)**
- **Siol, Werner, Dr.**
  **D-64297 Darmstadt (DE)**
- **Terbrack, Ulrich**
  **D-64354 Reinheim (DE)**

(56) Entgegenhaltungen:
**EP-A- 0 417 570**
**EP-A- 0 538 139**
**EP-A- 0 548 721**
**EP-A- 0 550 851**
**US-A- 4 370 369**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 590 461 B1

## Beschreibung

Gebiet der Erfindung

Die Erfindung betrifft heißsiegelfähige Kunststoff-Folien KF, ausgebaut aus wenigstens zwei aufeinander haftenden Schichten, wobei eine Trägerschicht T aufgebaut ist aus einem schlagzähen Polystyrolharz PS und die andere, auf der Trägerschicht T haftende, Siegelschicht S aufgebaut ist aus 20 bis 100 Gew.-% eines Methacrylat-Copolymerisats P. Die Kunststoff-Folien KF eignen sich zum dichtenden Verschließen von Kunststoff-Behältern, beispielsweise aus Polystyrol, insbesondere zum Versiegeln von Behältern, in denen Lebensmittel aufbewahrt werden.

Stand der Technik

An die Stelle von Gefäßen und Behältern aus Holz oder aus anorganischen Werkstoffen wie Metall, Glas oder Keramik sind in der Gegenwart vielfach Kunststoff-Produkte getreten, insbesondere bei Behältern, die zur Konservierung von Lebensmitteln dienen.
Ein maßgeblicher Gesichtspunkt der Lebensmittelkonservierung, sei es durch Dehydratisierung, Gefrieren oder Sterilisieren, ist die vollständige Verhinderung mikrobiellen Wachstums. Daraus ergibt sich vielfach der Zwang, die Behälter gasdicht zu verschließen. Darüber hinaus sind bei Kunststoffbehältern die mechanische Stabilität, die Kontrolle des Wassergehalts, sowie die Einwirkung der Atmosphäre und des Lichts auf die konservierten Lebensmittel zur berücksichtigen (vgl. Ullmann's Encyclopedia of Industrial Chemistry, 25th Ed., Vol, A11, Seiten 523 bis 560, 583 bis 618, Verlag Chemie Weinheim, 1988; dort werden auch die geltenden Normen abgehandelt).
Zum Verschließen von Kunststoff-Gefäßen werden in der Lebensmitteltechnologie, insbesondere bei Molkereiprodukten wie beispielsweise Joghurt, weithin mit einem Siegellack beschichtete Aluminiumdeckel verwendet.

Vielfach bestehen derartige Aluminiumdeckel aus einem dreischichtigen Laminat, dessen äußere Schicht häufig aus (biaxial orientiertem) Polyethylenterephthalat (O-PET), biaxial orientiertem Polypropylen (O-PP) oder Polyamid (O-PA) oder aus Cellulose besteht. Die sich an die aus Aluminium bestehende Mittelschicht anschließende heißsiegelbare innere Schicht besteht dagegen gewöhnlich aus Polyethylen, Ethylen-Copolymerisaten oder aus Polypropylen, (G. Stehle, Neue Verpackung 9/1991, Seiten 94 bis 101). In US-PS 4 753 708 werden beispielsweise heißsiegelfähige, zur Versiegelung verschiedener Untergründe, beispielsweise Polystyrol-Untergründe, geeignete Beschichtungsmittel für Metallfolien beschrieben, bestehend aus einer filmbildenden Dispersion eines Pfropfpolymerisats auf Basis Olefin/(Meth)acrylat in einem organischen Lösungsmittel. Gegen die Verwendung von Aluminium zur Verpackung beispielsweise von Lebensmitteln werden jedoch zunehmend ökologische und ökonomische Gründe in die Diskussion gebracht. Daher kommen auch Kunststoff-Folien anstelle von Aluminium zur Anwendung, die mit einem siegelfähigen Lack versehen sind. Als relativ preisgünstiges Material mit guten Barriereeigenschaften gegenüber Gaspermeation spielt Hart-PVC eine ganz erhebliche Rolle, wobei als Siegellackschicht gewöhnlich ein Acrylharz dient, dessen Haftfestigkeit und Aufschmelzpunkt durch Zusätze zweckmäßig modifiziert werden kann.
In DE-A 35 31 036 werden durch Koextrusion herstellbare Kunststoff-Folien beschrieben, die aus einer siegelfähigen Schicht aus schlagzähem Polystyrol, einem Blockpolymerisat und einem Gleitmittel bestehen, gegebenenfalls aufgebracht auf einer Trägerschicht.
In EP-A 0 406 681 wird auf die Problematik bei Verwendung von heißsiegelfähigen Kunststoff-Folien anstelle von Aluminiumlaminaten hingewiesen. Einschränkend ist im Regelfall der wesentlich engere Verarbeitungsbereich (zwischen 10 und 20 K), der ziemlich konstant eingehalten werden muß, um eine störungsfreie Produktion und einen einwandfreien Gebrauch der versiegelten Packung zu garantieren. Bei Abfüllanlagen mit mehreren Kavitäten zum gleichzeitigen Abfüllen von Bechern ist diese Voraussetzung nicht immer erfüllt. EP-A 0 406 681 beschreibt zur Lösung o.g. Probleme eine nach dem Koextrusionsverfahren oder durch Kaschieren hergestellte Kunststoff-Folie aus zwei Schichten A und C sowie gegebenenfalls einer Schicht B und gegebenenfalls je einer Schicht eines Haftvermittlers D zur Verbindung von jeweils zweien der Schichten A, gegebenenfalls B und C, bestehend aus 1 - 50 % einer Schicht aus einem heißsiegelfähigen, schlagzähen Polystyrol A, bis zu 95 % einer Trägerschicht B und 1 bis 99 % einer hochschmelzenden Kunststoff-Schicht C, wobei die Summe der Stärken oder des Gewichts von A, gegebenenfalls B und C jeweils 100 % ist.

In der europäischen Patentanmeldung EP-A 0 437 745 wird eine siegelfähige, thermoplastische Formmasse beansprucht, die aus mindestens 4 Komponenten besteht: einem schlagzähen Polystyrolharz A, einem Blockpolymeren B, einem Gleitmittel C sowie mindestens einem Homo- oder Copolymerisat D eines aliphatischen Olefins. Die siegelfähige Formmasse wird auf übliche Trägerfolien, die vorzugsweise aus Polystyrol bestehen, aufgebracht, wobei die Folien zum Versiegeln von Behältern aus Polystyrol oder Polyolefinen wie Polyethylen oder Polypropylen dienen.
In den noch unveröffentlichten deutschen Patentanmeldungen P 41 42 691.6 und P 41 42 692.4 werden demgegenüber heißsiegelfähige Kunststoff-Folien auf Basis Polystyrolverträglicher Methacrylate beschrieben, wobei die Folien aus einer Formmasse mit zweiphasigem Aufbau bestehen, bei der die Zähphasenpfropfäste und die ungepfropften Anteile

mit Polystyrol verträglich sind. Von den Anmeldungen umfaßt werden auch mehrschichtige Verbundfolien, bei denen die o.g. Formmmassen zu Trägerfolien verarbeitet werden und in einem zweiten Schritt mit Polystyrol-verträglichen Formmassen, die einen zweiphasigen Aufbau besitzen, beschichtet werden.

Aufgabe und Lösung

Die hohe Permeabilität für Gase und Dämpfe kann bei einigen Kunststoffen bei Verwendung als Verpackungsmaterial zu Problemen bei der Lebensmittelkonservierung führen.

Das führt zu den im Stand der Technik beschriebenen mehrschichtigen Folien (DE-A 35 31 036, EP-A 0 406 681, EP-A 0 437 745), die allerdings einen erhöhten Aufwand bei der Herstellung und eine problematische Entsorgung bedingen, bei der ein sortenreines Recycling aufgrund der Unverträglichkeit der einzelnen Schichtmaterialien nicht möglich ist.

Dem weiterhin bestehenden Bedarf nach heißsiegelfähigen Folienmaterialien, die zum gasdichten Verschließen von Kunststoffbehältern, insbesondere solchen aus Polystyrol, in homogener Schicht und ohne zusätzliche Oberflächenbehandlung geeignet sind, wird in den deutschen Patentanmeldung P 41 42 691.6 und P 41 42 692.4 genügt. Die dort beschriebenen Folien sind unter Verwendung herkömmlicher Anlagen direkt auf Polystyrol siegelbar. Bei Mehrschicht-Verbunden, bestehend aus einer Trägerfolie aufgebaut aus einer Polystyrol-Verträglichen Formmasse mit zweiphasigem Aufbau und einer Siegelschicht aus einer Polystyrol-verträglichen leichtfließenden Formmasse (Ansprüche 7 und 8 in P 41 42 691.6 bzw. Ansprüche 5 und 6 in P 41 42 692.4), macht sich jedoch der große Viskositätsunterschied zwischen schwerfließender Trägerschicht-Formmasse und leichtfließender Siegelschicht-Formmasse bei der Verarbietung störend bemerkbar.

Darüber hinaus weisen solche Rein-(Meth)acrylat-Folien bei mechanischer Belastung eine nicht immer genügende Weiterreißfestigkeit auf.

Es wurde nun gefunden, daß heißsiegelfähige Kunststoff-Folien KF die Anforderungen hinsichtlich Recyclierbarkeit, mechanischer Stabilität, Verarbeitbarkeit und Herstellbarkeit, insbesondere durch Coextrusion weitestgehend erfüllen.

Die heißsiegelfähigen Kunststoff-Folien KF sind aufgebaut aus wenigstens zwei aufeinander haftenden Schichten, wobei eine Trägerschicht T aufgebaut ist aus einem schlagzähen, aus einer zweiphasigen Polymermischung bestehenden Polystyrolharz PS und einer anderen - auf der Trägerschicht T haftenden - Siegelschicht S aufgebaut aus 20 bis 100 Gew.-% eines Copolymerisats P, bestehend aus

p1) 30 bis 90 Gew.-% Methylmethacrylat und/oder Ethylmethacrylat,

p2) 10 bis 70 Gew.-% mindestens eines Monomeren der Formel I

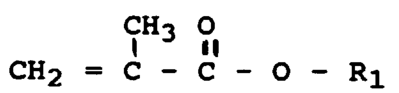

(I),

worin:

$R_1$ für einen Alkylrest mit mindestens 2 Kohlenstoffatomen mehr als bei p1) und bis 24 Kohlenstoffatomen

steht und

p3) 0 bis 10 Gew.-%, vorzugsweise 1 bis 8 Gew.-% eines mit den Monomeren pl) und p2) copolymerisierbaren Monomeren, das sich von den Monomeren p1) und p2) unterscheidet,

wobei sich die Monomeren p1), p2) und p3) zu 100 Gew.-% ergänzen und sich der Anteil des Monomeren p2) nach der Regel richtet, daß mit steigender Anzahl der Kohlenstoffatome in $R_1$ der relative Anteil des Monomeren p2) abnehmen soll.

Weitere Ausführungsformen der Erfindung sind in den Ansprüchen 2-13 beschrieben.

Darüber hinaus enthält die Siegelschicht S, sofern sie nicht zu 100 Gew.-% aus dem Copolymerisat P aufgebaut ist, bis zu 80 Gew.-% eines oder mehrerer anderer Polymerisate, wie beispielsweise Styrol-Butadien-Styrol-Blockcopolymere BC, die insbesondere der Verbesserung der Zähigkeit der Siegelschicht und deren Verarbeitbarkeit auf einem Extruder dienen.

Gegebenenfalls kann die Trägerschicht T in Anteilen von 1 bis zu 50 Gew.-% Copolymerisat P oder die anderen Bestandteile der Siegelschicht S enthalten. Ebenso kann die Siegelschicht S in Anteilen von bis zu 80 Gew.-%, vorzugsweise 0,1 bis 60 Gew.-% Trägermaterial T enthalten. Dabei ist bevorzugt, daß die Siegelschicht S einen wenigstens um 20, besonders bevorzugt einen um 40 Gew.-% höheren Gehalt an Copolymeren P enthält als die Trägerschicht T. Dies ist insbesondere unter dem Gesichtspunkt des Wiedereinarbeitens von Stanzabfällen von erheblicher Bedeutung. Insbesondere wenn man von einer schlagzäh modifizierten Siegelschicht S ausgeht, beispielsweise einer Siegelschicht, die zu 50 Gew.-% aus dem Copolymerisat P und zu 50 Gew.-% aus einem Styrol-Butadien-Styrol-Blockcopolymeren BC besteht, kann die Siegelschicht auch deutlich dicker gewählt werden, da hier eine Versprödung des Gesamtsystems durch eine zu dicke, spröde Siegelschicht S nicht gegeben ist. Die Dicke der Gesamtfolie liegt im allgemeinen zwischen 80 und 500 µm, die Dicke der Trägerschicht T zwischen 5 und 495 µm und die Dicke der Siegelschicht S zwischen 2 und 495 µm. Gegebenenfalls enthält die Siegelfolie noch eine dritte Schicht, die das Anhaften der Siegelfolie am Siegelkopf verhindert.

Durchführung der Erfindung

Das schlagzähe Polystyrolharz PS für die Trägerschicht T

Unter den schlagzähen Polystyrolharzen PS sind zweiphasige Polymermischungen zu verstehen. Diese Polystyrolharze PS können Styrolpolymerisate sein mit einer die Matrix bildenden polymeren Hartphase HP, die vorzugsweise vinylaromatische Monomereinheiten enthält, worin die polymere Zähphase ZP bildenden Partikel mit Teilchengrößen zwischen 0,01 und 20 um fein dispergiert sind. Der Anteil der polymeren Hartphase HP an der zweiphasigen Polymermischung beträgt vorzugsweise 50 bis 95 Gew.-%, besonders vorzugsweise 60 bis 95 Gew.-%, ganz besonders vorzugsweise 80 bis 95 Gew.-%. Als vinylaromatische Monomereinheiten, die die Hartphase HP aufbauen, können insbesondere Styrol, $\alpha$-Methylstyrol, p-Methylstyrol oder weitere substituierte Styrole bzw. Mischungen hiervon, bevorzugt jedoch Styrol verwendet werden.

Die die Zähphase ZP ausbildenden Polymeren weisen Glastemperaturen $Tg < 10$ Grad C, bevorzugt $< -10$ Grad C auf und werden gewöhnlich unter dem Oberbegriff "Elastomere" oder "Kautschuke" zusammengefaßt. Die gegebenenfalls vernetzten Polymeren sind beispielsweise Polysiloxane, Ethylenvinylacetat-Copolymere, Polyacrylate, bevorzugt Polyolefine sowie besonders bevorzugt Polydiene.

Bei den Polyolefinen handelt es sich vorzugsweise um Homo- bzw. Copolymerisate des Ethylens, Propylens oder Isobutylens (vgl. Ullmanns Enzyklopädie der technischen Chemie, 4. Aufl., Bd. 19, Seiten 167 bis 226, Verlag Chemie, 1980). Im allgemeinen liegen die mittleren Molekulargewichte Mw (Bestimmung beispielsweise per Gelpermeationschromatographie: vgl. hierzug beispielsweise H.F. Mark et al. Encyclopedia of Polymer Science & Engineering, 2nd. Ed. Vol. 10, Seiten 1 bis 19, J. Wiley, 1987) der unvernetzten Polyolefine im Bereich zwischen $5 \times 10^4$ und $10^6$ Dalton. Von besonderem Interesse sind Ethylen-Propylen-Dien (EPDM)-Terpolymerisate, wobei als Dienkomponente vorzugsweise Dicyclopentadien, Ethylidennorbornen oder Hexadien eingesetzt werden (vgl. Ullmann loc.cit., Bd. 13, Seiten 619 bis 621; Kirk-Othmer, Encyclopedia of Industrial Chemistry, 3rd. Ed. Vol. 8, seiten 492 bis 500, Vol. 7, Seite 687, 693, J. Wiley, 1979; zur Herstellung vgl. S. Cesca, J. Polym. Sci., Macromol. Rev., 10, Seite 1, 1975).

Bei den besonders bevorzugten Polydienen handelt es sich insbesondere um die einschlägig bekannten Kautschuk-Typen wie Polybutadien, Poly-2-chlorbutadien oder Polyisopren (vgl. Ullmann loc.cit., 4. Aufl., Bd. 13, Seiten 595 bis 635). Die mittleren Molekulargewichte Mw der unvernetzten Polydiene liegen in der Regel im Bereich zwischen $5 \times 10^4$ und $10^6$ Dalton. Vorzugsweise ist die Zähphase ZP aus Polybutadien aufgebaut, welches besonders bevorzugt mit Styrol-Monomereinheiten gepfropft ist. Hierfür sind in der Regel besonders Polybutadiene vom medium- oder high-cis-Typ geeignet, die mittlere Molekulargewichte zwischen $7 \times 10^4$ und $4{,}5 \times 10^5$ Dalton aufweisen. Die gegebenenfalls vernetzte Zähphase liegt fein dispergiert in einer vorzugsweise aus Styrol-Monomereinheiten bestehenden Hartphasen (HP)-Matrix vor, wobei die Polymerisation der die Hartphase HP aufbauenden Monomeren in Gegenwart der Polybutadien-Moleküle vorzugsweise radikalisch initiiert durchgeführt wird. Die mittleren Molekulargewichte der Hartphasen-Polymeren HP liegt zwischen $5 \times 10^4$ und $5 \times 10^5$, vorzugsweise zwischen 105 und $3{,}5 \times 10^5$ Dalton. Die Zähphase ZP ist in Anteilen von 5 bis 50 Gew.-%, vorzugsweise zwischen 5 und 40 Gew.-%, besonders bevorzugt zwischen 5 und 20 Gew.-% in der Hartphase HP vorhanden. Die mittleren Teilchengrößen der dispergierten Zähphase ZP, deren Bestimmung beispielsweise elektronenmikroskopisch erfolgen kann, liegen im Bereich zwischen 0,01 und 20 um, vorzugsweise zwischen 0,3 und 10 um. Die Herstellung der schlagzähen Polystyrolharze PS ist bekannt; so werden hochschlagzähe Polystyrolharze beispielsweise durch Substanz-, Suspensions- oder Emulsionspolymerisation hergestellt (vgl. Kirk-Othmer, loc.cit., Bd. 17, Seiten 470, 471; Bd. 21,Seiten 811 bis 816, J. Wiley 1982, 1983).

Darüber hinaus kann das schlagzähe Polystyrolharz Styrol-Butadien-Blockcopolymere bzw. Styrol-Isopren-Blockcopolymere enthalten, wobei Multiblockcopolymere z.B. sowohl 2-Block-, 3-Block- als auch Sternblockcopolymere zu Einsatz kommen können (zur Synthese von Blockpolymeren aus Styrol und einem zweiten Monomeren vgl. beispielsweise Houben-Weyl, Methoden der organischen Chemie, 4. Aufl., Band E20 / 2. Teil, Seiten 987 bis 993, Georg Thieme, Stuttgart, 1987). Insbesondere Styrol-Butadien-Styrol-3-Blockcopolymere oder sternförmige Styrol-Butadien-Copolymere mit einem hohen Gehalt an Butadien, beispielsweise über 50 Gew.-%, eignen sich zur Modifizierung der Polystyrolharze PS, insbesondere hinsichtlich der Weiterreißfestigkeit. So enthalten die Polystyrolharze in einer bevorzugten Ausführungsform wenigstens 2 Gew.-% eines Styrol-Butadien-Styrol-Blockcopolymeren, in einer besonders bevorzugten Ausführungsform 5 bis 40 Gew.-% eines Styrol-Butadien-Styrol-Blockcopolymeren mit 50 bis 80 Gew.-% Butadienanteilen.

Darüber hinaus kann das Polystyrolharz PS gänzlich aus Blockcopolymeren bestehen. In diesem Fall wird jedoch ein geringer Anteil an Butadien im Blockcopolymeren gewählt, so daß der Butadien-Gehalt des Polystyrolharzes PS insgesamt weniger als 50 Gew.-%, bevorzugt weniger als 40 Gew.-%, beträgt. Besonders bevorzugt sind Butadiengehalte zwischen 10 und 30 Gew.-% bezogen auf das Polystyrolharz PS.
Desweiteren kann das Polystyrolharz PS weitere Polymeranteile, wie beispielsweise Polybuten in Anteilen von 2 bis 6 Gew.-% bezogen auf PS oder die Bestandteile der Siegelschicht in Anteilen von bis zu 50 Gew.-% bezogen auf PS enthalten.

Das Polystyrolharz PS kann auch eine Mischung aus den genannten Multiblockcopolymeren, beispielsweise sowohl solchen mit mehr als 50 Gew.-% Polybutadien oder solchen mit weniger als 50 Gew.-%, beispielsweise mit bis 15 Gew.-% Polybutadien als auch durch radikalische Polymerisation hergestellten Schlagzäh-Styrol-Polymerisaten, die die für Schlagzäh-Polystyrol charakteristische Teilchenstruktur aufweisen, darstellen. Darüber hinaus kann als Mischungskomponente Polystyrol, das kein Polybutadien enthält, verwendet werden.

Besonders bevorzugt sind jedoch als Polystyrolharze PS schlagzähe Polystyrol-Typen, die Zähphasenpartikel enthalten, wie sie beispielsweise durch radikalische Polymerisation von Styrol in Gegenwart von Polybutadien erhalten werden. In der Regel haben die Zähphasenpartikel eine Größe von 1 bis 5 µm, bevorzugt 2 bis 4 µm, wobei der Polybutadiengehalt dieser Polystyrolharze PS mit Zähphasenpartikeln im allgemeinen im Bereich zwischen 7 und 15 Gew.-%, bevorzugt zwischen 8 und 11 Gew.-% bezogen auf PS liegen. Darüber hinaus kann das Polystyrolharz PS noch die bei der Polymerverarbeitung üblichen Zuschläge, wie beispielsweise Gleitmittel (z.B. Paraffinöl), Stabilisatoren wie z.B. Radikalfänger und/oder Pigmente enthalten.

Die Siegelschicht S

Wesentlicher Bestandteil der Siegelschicht S ist das Copolymerisat P, das im folgenden näher beschrieben wird. So ist das Copolymerisat P in der Siegelschicht S zu wenigstens 20 Gew.-% und bis zu 100 Gew.-% vorhanden. Im allgemeinen enthält die Siegelschicht S wenigstens 30 Gew.-% Copolymerisat P. Bevorzugt sind Zusammensetzungen der Siegelschicht S, die 40 bis 90 Gew.-% Copolymerisat P enthalten, ganz besonders bevorzugt 45 - 75 Gew.-% Copolymer P.
Im allgemeinen dienen die in Anteilen von bis zu 80 Gew.-% und in der bevorzugten Zusammensetzung bis zu 50 Gew.-% in der Siegelschicht S enthaltenen vom Copolymerisat P unterschiedlichen Polymerisate der Schlagzähmodifizierung der Siegelschicht S bzw. zur Veränderung der Schmelzerheologie bei der Verarbeitung.
Das Copolymerisat P besteht im wesentlichen aus den oben genannten Bausteinen p1), p2) und p3). Die Anteile der Monomereinheiten p1), p2) und p3), die das Copolymerisat P aufbauen, ergänzen sich zu 100 Gew.-%.
Das Copolymerisat P wird in an sich bekannter Weise aus den Monomeren p1), p2) und gegebenenfalls p3) durch radikalische oder anionische Polymerisation (vgl. H. Rauch-Puntigam, Th. Völker, Acryl- und Methacrylatverbindungen, Springer-Verlag, Heidelberg, 1967; Houben-Weyl, 4. Aufl. Bd. XIV/1, Seiten 1010 ff, Georg Thieme Verlag, 1961) bzw. durch Gruppentransfer-Polymerisation (vgl. beispielsweise Houben-Weyl, loc.cit., Bd. E20, Seiten 153 bis 160, 1987) gebildet. Die Polymerisation von P kann in Masse, Suspension, Emulsion oder Lösung durchgeführt werden. Bei der radikalischen Polymerisation werden vorzugsweise Initiatoren, wie Peroxid-Verbindungen, besonders organische Peroxide wie Dibenzoylperoxid oder Lauroylperoxid, Perester wie t-Butylperneodecanoat oder t-Butyl-per-2-ethylhexanoat, Perketale, Azoverbindungen wie Azodiisobutyronitril oder Redox-Initiatoren in Mengen von 0,01 bis 5 Gew.-% bezogen auf die Monomeranteile eingesetzt. Die Polymerisation auslösenden Radikale können auch durch hochenergetische Strahlung erzeugt werden. Als Polymerisationsregler kommen beispielsweise herkömmliche Schwefelverbindungen, wie beispielsweise Mercaptoverbindungen in Mengen von 0,1 bis 5 Gew.-% bezogen auf die Monomeranteile, in Frage. Im allgemeinen liegen die mittleren Molekulargewichte Mw (zur Bestimmung von Mw s.o.) zwischen 2 x $10^3$ und $10^6$ Dalton, vorzugsweise zwischen $10^4$ und 2 x $10^5$ Dalton, besonders bevorzugt zwischen 2 - $10^4$ und 1 x $10^5$ Dalton. Die Uneinheitlichkeit U (= Mw/Mn -1) liegt im allgemeinen im Bereich zwischen 0,2 und 3.

Vorzugsweise enthalten die Copolymerisate P 20 bis 90 Gew.-% Monomereinheiten p1) und 10 bis 80 Gew.-% Monomereinheiten p2) der Formel I, wobei $R_1$ für einen Alkylrest mit 3 bis 24 Kohlenstoffatomen, vorzugsweise 4 bis 18 Kohlenstoffatomen, steht. Darüber hinaus ist die Befolgung der Regel wichtig, daß mit steigender Zahl der Kohlenstoffatome in $R_1$ der relative Anteil des Monomeren p2) am Copolymerisat P abnehmen soll, d.h. der relative Anteil dieser Monomeren soll sich gegenläufig zur Zahl der Kohlenstoffatome in $R_1$ verhalten. Quantitativ kann die Regel für den Anteil der Monomeren p2) am Copolymerisat P wie folgt gefaßt werden (siehe auch DE-OS 37 30 025 = US-Patent 4 952 455):

$$\text{Gew.-\% Monomer p2} = \frac{\text{(Molekulargewicht des Monomeren p1)}}{\text{(Molekulargewicht des Monomeren p1 + Molekulargewicht des Monomeren p2)}} \times 100$$

Monomere p2) sind gemäß der Formel I Methacrylsäureester, worin $R_1$ für Propyl, n-Butyl, Isobutyl, Amyl, Isoamyl, n-Pentyl, n-Hexyl, n-Octyl, 2-Ethylhexyl, n-Decyl, n-Dodecyl, n-Tetradecyl, n-Hexadecyl, oder n-Stearyl sowie für die Alkylrest der Talgfettalkohole steht. Ebenso kann R1 für einen gegebenenfalls substituierten Cycloalkylrest stehen, wie Cyclopentyl, Cyclohexyl, Cycloheptyl, wobei $R_1$ = Cyclohexyl bevorzugt ist.

Die Comonomeren p3) können in Mengen von 0 bis 10 Gew.-%, vorzugsweise in Mengen von 1 bis 8 Gew.-% im Copolymerisat P anwesend sein. Comonomere p3) sind beispielsweise: (Meth)acrylsäure, Salze der (Meth)acrylsäure, Hydroxyalkylester der (Meth)acrylsäure, wie beispielsweise 2-Hydroxyethyl(meth)acrylat oder 2-Hydroxypropyl(meth) acrylat, Alkoxyalkylester der (Meth)acrylsäure, wie 2-Butoxyethyl(meth)acrylat oder 2-Methoxyethyl(meth)acrylat, sowie Aminoalkylester der (Meth)acrylsäure, wie 2-Dimethylaminoethyl(meth)acrylat, 2,2,6,6-Tetramethylpiperidyl-4-(meth)acrylat oder 3-Dimethylaminopropyl-(meth)acrylat. Darüber hinaus kann p3) auch Styrol oder einen oder mehrere $C_1$-$C_{20}$-Ester der Acrylsäure darstellen. Im allgemeinen ist der Anteil der Acrylsäureester am Copolymerisat P jedoch auf < 5 Gew.-% beschränkt. Bevorzugt sind Copolymerisate P, die < 1 Gew.-% Ester der Acrylsäure enthalten. Ganz besonders bevorzugt sind solche Copolymerisate P, die keine Anteile an Acrylsäureestern enthalten.

Die Copolymerisate P bilden im allgemeinen mit den für sich genommenen Hartphasenpolymerisaten HP der schlagzähen Polystyrolharze PS verträgliche Polymermischungen PM, deren Charakterisierung nach anerkannten Kriterien erfolgt (vgl. hierzu Kirk-Othmer, loc.cit., Vol. 18, Seiten 457 bis 460; J. Brandrup, E.H. Immergut, Polymer Handbook, 2nd. Ed., III, Seite 211, Wiley Interscience, 1975). Bei den verträglichen Polymermischungen PM beobachtet man einen Brechungsindex und eine einzige Glasübergangstemperatur, die zwischen den Glasübergangstemperaturen der beiden Polymerisat-Komponenten P und HP liegt. Als weiterer Hinweis auf die Verträglichkeit wird das Auftreten der LCST (Lower Critical Solution Temperature) herangezogen, deren Existenz auf dem Vorgang beruht, daß sich beim Erwärmen die bis dahin klare transparente Mischung in verschiedene Phasen auftrennt und optisch trübe wird, was einen eindeutigen Beweis dafür darstellt, daß die ursprüngliche Polymermischung aus einer einzigen, im thermodynamischen Gleichgewicht befindlichen Phase bestand (vgl. hierzu beispielsweise D.R. Paul, Polymer Blends & Mixtures, Seiten 1 bis 3, Martinus Nijhoff Publishers, Dordrecht, Boston, 1985). Wenn auch eine völlige Verträglichkeit im Sinne eines Polymerblends mit nur einer von der Zusammensetzung abhängigen Glastemperatur in dem hier vorliegenden Polymergemisch (Polybutadien, Polystyrol, Methacrylatcopolymer) nicht gegeben ist, so findet man doch bei Einhaltung der in Formel 1 (siehe auch DE-OS 37 30 025) gegebenen Zusammensetzung für das Copolymere P einerseits eine gute Haftung der Siegelschicht auf der Polystyrol-Trägerschicht, aber auch eine gute Haftung auf dem zu siegelnden Polystyroluntergrund. Darüber hinaus ermöglicht die gute Verträglichkeit von Siegelschicht S und Trägerfolie T ein einfaches Recycling des Gesamtverbundes.

Erfindungsgemäß gut brauchbare Copolymerisate P können zum Beispiel die Zusammensetzung 40 - 60 Gew.-% Methylmethacrylat / 60 - 40 Gew.-% Butylmethacrylat besitzen. Ebenso sind beispielsweise Copolymerisate P aus 70 Gew.-% Methylmethacrylat und 30 Gew.-% n-Decylmethacrylat brauchbar. Vorliegende Beobachtungen scheinen darauf hinzudeuten, daß zwischen den Methyl- bzw. Ethyl-Substituenten der Monomerkomponente p1) und den Substituenten $R_2$ der Monomerkomponente p2) ein Unterschied von $\geq 2$ bevorzugt $\geq 3$ Kohlenstoffatomen bestehen sollte. Von besonderem Interesse sind Copolymere aus 50 Gew.-% Methylmethacrylat und 50 Gew.-% Butylmethacrylat mit einem J-Wert von 15 bis 70 ml/g, bevorzugt J = 20 bis 40 ml/g (zur Bestimmung des J-Werts, der in Chloroform bei 25 Grad C durchgeführt wird und der ein Maß für das Molekulargewicht des Copolymerisats P ist, vgl. DIN 51 562). Von besonderem Interesse sind auch Copolymere aus ca. 50 Gew.-% Ethylmethacrylat und ca. 50 Gew.-% Butylmethacrylat. In diesem Fall ist ein J-Wert von 20 bis 50, bevorzugt 25 bis 40 ml/g empfehlenswert.

Von besonderem Interesse sind Siegelmassen S, bestehend aus Abmischungen aus 20 bis 90 Gew.-% der oben beschriebenen Copolymeren P und 80 bis 10 Gew.-% eines oder mehrerer Blockcopolymerer BC, aufgebaut aus mindestens einem Block eines oder mehrerer Monomeren aus der Gruppe Styrol, $\alpha$-Methylstyrol und kernalkyliertem Styrol und mindestens einem Block ausgewählt aus der Gruppe Isopren und Butadien. Das Blockcopolymere BC kann linear, verzweigt oder sternförmig aufgebaut sein.

Als Abmischkomponente für das Copolymerisat P kommen hierbei Blockcopolymere BC mit 2 oder mehreren Polystyrolblöcken in Frage. Bevorzugt sind Multiblockcopolymere aus Styrol und Butadien z.B. lineare Styrol-Butydien-Styrol-(SBS)-3-Blockcopolymere und radial bzw. sternförmige SBS-Blockcopolymere.

Besonders bevorzugt sind SBS-Blockpolymere, die maximal 50 Gew.-% Styrol-Blöcke enthalten. Ganz besonders bevorzugt sind lineare SBS-Triblockcopolymere mit einem Butadiengehalt von ca. 70 Gew.-%.

Neben o.g. Blockcopolymeren BC mit hohem Butadien-Gehalt können auch noch Styrol-Butadien-Blockcopolymere mit Butadien-Gehalten von weniger als 50 Gew.-% und bis 15 Gew.-%, insbesondere 30 bis 18 Gew.-% anwesend sein.

Abmischungen aus derartigen SBS-Blockcopolymeren mit den Copolymeren P sind einerseits deutlich zäher als das Copolymere P selbst. So zeigt diese Abmischung erhöhte Dehnbarkeit und eine gewisse Weiterreißfestigkeit. Die Blockcopolymer BC/Copolymer P -Abmischungen auf schlagzähen Trägermaterialien PS lassen sich bei niedrigen

Temperaturen (z.B. 140 - 200 Grad C) auf schlagzähes Polystyrol siegeln. Besonders vorteilhaft ist jedoch das gute Verhalten dieser Blockcopolymer BC/Copolymer P-Mischung als Siegelmasse beim Öffnen der damit versiegelten Kunststoffbehälter. So gestatten die damit versiegelten Kunststoffe ein ruckfreies, weiches Öffnen (Peeling).
Darüber hinaus läßt sich das Fließverhalten der Blockcopolymer BC/Copolymer P -Mischung sehr gut an das Fließverhalten des schlagzähen Trägermaterials PS anpassen, so daß eine einfache Coextrusion der Siegelschicht auf den Träger möglich ist.
Geht man beispielsweise von einem niedermolekularen Copolymeren P aus (z.B. ein Copolymeres aus 50 Teilen Methylmethacrylat und 50 Teilen Butylmethacrylat mit J = 23 ml/g) so findet man im Meßkneter bei 190 Grad C für dieses Material ein Drehmoment von nahezu 0 Nm. Durch Abmischung von 50 Teilen dieses extrem leicht fließenden Materials mit 50 Teilen Cariflex® TR 1102 (SBS-Blockcopolymer mit ca. 70 % Butadien, Produkt der Fa. Shell) erhält man dagegen eine gut fließende Coextrusionsmasse, die auf dem oben genannten Meßkneter ein Drehmoment von 3,1 Nm zeigt.

Erhöht man den Anteil des SBS-Blockpolymeren, so erhöht man das Drehmoment (z.B. 4,6 Nm bei einer Mischung aus 70 Teilen Cariflex® TR 1102 und 30 Teilen Copolymeren aus 50 Teilen Methylmethacrylat und 50 Teilen Butylmethacrylat mit J = 23 ml/g).
Im allgemeinen kommen Abmischungen aus 75 - 25 Gew.-Teilen Blockcopolymeren BC und 25 - 75 Gew.-Teilen Copolymeren P zur Anwendung.
Besonders interessant sind Abmischungen im Gewichts-Verhältnis 65 - 35 bis 35 - 65.

Neben den beschriebenen SBS-Blockcopolymeren mit hohem Butadiengehalt (> 50 Gew.-%) können auch Blockcopolymere BC mit beispielsweise 15 - 40 Gew.-% Butadien zum Einsatz kommen. Bei diesen SBS-Blockcopolymeren handelt es sich im allgemeinen um glasklare, schlagzähe Polystyrol-Formmassen. Auch diese Blockcopolymeren BC lassen sich in Siegelmassen S ausgezeichnet zur Modifizierung der Rheologie der Copolymere P einsetzen. Im allgemeinen ist jedoch das Abzugsverhalten beim Öffnen der mit dieser Siegelmasse versiegelten Behälter nicht so gut wie das Abzugsverhalten bei Abmischungen mit SBS-Blockcopolymeren mit einem Butadiengehalt > 50 %. Vorzugsweise enthält die Siegelmasse S wenigstens 3 Komponenten, nämlich 45 - 65 Gew.-% des Copolymeren P), 10 - 35 Gew.-% der Blockcopolymeren mit einem Butadiengehalt > 50 Gew.-% und 10 - 35 Gew.-% des Blockcopolymeren mit einem Butadiengehalt von 15 bis 50 Gew.-%.

Die Molekulargewichte Mw der eingesetzten SBS-Blockcopolymere liegen im Bereich 50 000 bis 500 000 Dalton, bevorzugt im Bereich 80 000 bis 300 000 Dalton und ganz besonders bevorzugt im Bereich 100 000 bis 250 000 Dalton.
Der Melt-Flow-Index der SBS-Blockcopolymeren (ohne Zusatz von Copolymeren P) liegt bei 200 Grad C (5 kg) im allgemeinen im Bereich 4 bis 20 g/10 Minuten, bevorzugt im Bereich 5 bis 10 g/10 Minuten.
Neben diesen besonders bevorzugten Styrol-Butadien-Blockcopolymeren können auch die entsprechenden Blockcopolymeren BC auf Basis Isopren zum Einsatz kommen, bzw. die entsprechenden hydrierten Blockcopolymeren BC (Styrol-(Ethylen-Butylen)-Styrol-Blockcopolymeren bzw. Styrol-(Ethylen-Propylen)-Styrol-Blockcopolymeren.
Die Synthese der Styrol-Butadien(Isopren)-Blockcopolymeren erfolgt im allgemeinen auf dem Wege der anionischen Polymerisation (siehe Houben-Weyl, loc.cit., 4. Aufl., Band E 20/2, Seite 989), dabei kommen in der Regel Lithiumalkyle als Initiatoren zum Einsatz.

Neben der oben genannten Modifizierung der Copolymeren P durch Abmischung mit Blockcopolymeren BC auf Basis SBS ist auch eine Modifizierung durch Elastomer-Copolymer P -Pfropfprodukte möglich. Von besonderem Interesse sind dabei Emulsionspolymerisate mit einer Kern-Schale-Struktur, wobei auf einem Acrylatkautschuk (z.B. Butylacrylat, vernetzt mit Allylmethacrylat) eine Copolymer P -Schale zumindest teilweise aufgepfropft wurde. Diese schlagzähmodifizierten Copolymere P mit einem Elastomeranteil von 1 bis 65, bevorzugt von 10 bis 50 Gew.-% eignen sich als solche oder in Abmischung mit weiteren Copolymeren P als Siegelmasse S.
Auch auf diesem Wege läßt sich die Coextrudierbarkeit der Siegelmasse S verbessern (siehe Beispiele).
Derartig hergestellte und derartig zusammengesetzte Siegelmassen S weisen hohe Fließfähigkeiten auf und lassen sich bei niedriger Temperatur (130 bis 200 Grad C) auf den entsprechenden Untergrund (in der Regel Polystyrol) siegeln.

Die heißsiegelfähigen Kunststoff-Folien KF

Die erfindungsgemäßen Kunststoff-Folien KF, bestehend aus wenigstens zwei aufeinander haftenden Schichten, können in an sich bekannter Weise hergestellt werden, beispielsweise durch Extrusion der einzelnen Schichten und anschließendem Laminieren der Schichten aufeinander (vgl. H.F. Mark et al., Encyclopedia of Polymer Science & Technology, 2nd. Ed., Vol. 11, Seiten 269 bis 271, J. Wiley, 1988; ibidem Vol. 4, Seite 816; Ullmanns Encyclopedia of Industrial Chemistry, Vol. A11, Seiten 85 bis 111, Verlag Chemie, Weinheim, 1988; F. Hensen et al. Handbuch der Kunststoff-Extrusionstechnik, Bd. II, Extrusionsanlagen, Carl Hanser 1986).
Die Foliendicke liegt im allgemeinen im Bereich von 80 bis 500 µm, vorzugsweise im Bereich zwischen 120 und 350 um, wobei die Trägerschicht T eine Dicke zwischen 5 und 495 µm, vorzugsweise zwischen 50 und 300 µm und die

Siegelschicht S eine Dicke zwischen 2 und 495 µm, bevorzugt zwischen 5 und 100 µm aufweisen können. Die besonders bevorzugten Siegelschichten S, bestehend aus einer Mischung enthaltend 20 bis 90 Gew.-% des schlagzähen Polystyrolharzes PS, bevorzugt eines der o.a. styrolhaltigen Blockcopolymeren BC, weisen Dicken zwischen 5 und 495 µm, bevorzugt zwischen 20 und 150 µm auf.

Besteht die Siegelschicht S zu 100 Gew.-% aus Copolymerisat P, beträgt die Dicke der Siegelschicht S vorzugsweise zwischen 2 und 100 µm, besonders vorzugsweise zwischen 4 und 40 µm. Bei größeren Dicken der solchermaßen aufgebauten Siegelschicht S kann eine Versprödung der Trägerschicht T durch die Siegelschicht S auftreten. Besonders geeignet für die Herstellung der erfindungsgemäßen heißsiegelfähigen Kunststoff-Folien KF mit zweischichtigem Aufbau ist die Coextrusion, da der Unterschied im Fließverhalten zwischen dem die Trägerschicht T bildenden schlagzähen Polystyrolharz PS und der das Copolymerisat P enthaltenden Siegelmasse im allgemeinen sehr gering ist. Dadurch bedingt können sehr gleichmäßige Schichtdicken für Trägerschicht T und Siegelschicht S mit der gewünschten Schichtdicke realisiert werden. Insbesondere bei dünnen Siegelschichten S < 20 µm Schichticke ist das ähnliche Fließverhalten von Trägerschichtmaterial PS und S Voraussetzung für einen homogenen Schichtauftrag von S. Ebenso kann die Siegelschicht durch Lackieren auf das Trägermaterial aufgebracht werden. Dabei ist zu beachten, daß das Lösungsmittel von P die Trägerschicht T beim Auftragen der Lackformulierung nur an der Oberfläche anlöst, d.h. ein schlechtes Lösungsmittel für PS ist. In diesem Fall kann sogar das reine Copolymerisat P als Siegelmasse S zum Einsatz kommen.

Die erfindungsgemäß erhaltenen Kunststoff-Folien KF lassen sich problemlos heißsiegeln (vgl. G. Stehle, Neue Verpackung loc.cit.), wobei die Verarbeitungssicherheit hervorzuheben ist. Die Folien KF sind tiefziehbar, stanzbar und bedruckbar. Sie sind mit den üblichen Methoden der Kunststoff-Einfärbung gut einfärbbar (vgl. Becker-Braun, Kunststoff-Handbuch, Bd. 1, Seiten 539 bis 540, Carl Hanser, 1990).

Die Kunststoff-Folien KF werden mit besonderem Vorteil zum Siegeln von Kunststoffbehältern, speziell solchen aus Polystyrol und schlagzähmodifiziertem Polystyrol eingesetzt. Die aus den erfindungsgemäßen Kunststoff-Folien KF hergestellten aufgesiegelten Deckel der Kunststoffbehälter entsprechen den eingangs genannten Forderungen nach mechanischer und chemischer Stabilität, thermischem Verhalten und Verarbeitbarkeit in hervorragendem Maße. Die Siegelbedingungen (z.B. die Temperatur der Siegellacke oder der Druck) können in weiten Grenzen variiert werden. Von besonderem Interesse ist die sehr leichte Siegelbarkeit dieser Folie, die auch durch eine 100 um dicke Folie eine Siegelung bereits bei 140 Grad C in 0,5 sec. gestattet. Dicke Folien erfordern entsprechend höhere Temperaturen oder längere Siegelzeiten. Dies ist in erster Linie eine Konsequenz der außerdordentlich guten Heißsiegelbarkeit der Siegelmasse S.

Die niedrigen Siegeltemperaturen machen häufig eine Antiblockbeschichtung zum Verhindern des Aufhaftens der Folie am heißen Siegelkopf überflüssig.

Ganz allgemein kann jedoch die Kunststoff-Folie KF mit Vorteil eine zusätzliche Schutzschicht Z gegen das Anbacken am Siegelkopf enthalten. Dies kann einerseits der häufig zur Kennzeichnung der Behälter verwendete Schutzlack sein, andererseits kann die Kunststoff-Folie bevorzugt auf der Seite des Trägermaterials T, eine ca. 2 bis 50 µm, bevorzugt ca. 5 bis 20 µm dicke Antiblockschicht Z aufweisen, aufgebaut aus einem hochschmelzenden Kunststoff, der im Temperaturbereich bis 200 (bevorzugt bis 250 Grad C) nicht am Siegelkopf anhaftet. Als solche hochschmelzenden Kunststoffe kommen beispielsweise zum einen Polyamide, z.B. Polyamid 6, Polyterephthalsäureester z.B. Polybutylenterephthalat in Frage, darüber hinaus schlagzäh modifiziertes PPE und allgemein Polymere mit einem Erweichungspunkt > 160 Grad C.

Darüber hinaus kann die Kunststoff-Folie KF noch weitere Schichten enthalten, z.B. eine Zwischenschicht zwischen T und S, die vorzugsweise aus recycliertem Folienmaterial besteht.

Ein besonderer Vorzug der erfindungsgemäßen mehrschichtigen Kunststoff-Folie KF ist jedoch, daß die einzelnen Schichten der Folie ohne jeden Primer direkt aufeinander haften.

Besonders bevorzugt ist der Umstand, daß Folienabfälle gänzlich recycliert werden können; so kann das die Folie aufbauende Material im allgemeinen direkt zur Herstellung des Trägers T oder zur Herstellung der Siegelschicht S mitverwendet werden. Bei entsprechend dünner Siegelschicht S ist dies sogar bis zu 100 % möglich. Ferner ist hervorzuheben:

- die Folien sind gut stanzbar;
- beim Stanzen anfallende Abfälle können zu neuen Folien verarbeitet werden;
- die Folien sind bedruckbar;
- die Kunststoff-Folien KF sowie gegebenenfalls die Trägerfolien T können sehr zäh eingestellt werden, so daß die Folien widerstandsfähig und gut stapelbar sind;
- das Polymethacrylat P, das schlagzähe Polystyrolharz PS und das (schlagzähe) Polystyrol des Behälters sind miteinander vollkommen verträglich, so daß ein gemeinsames Recycling von Behälter und Deckel möglich ist.

Die erfindungsgemäßen Folien sind direkt auf Polystyrol siegelbar. Im allgemeinen werden die Deckelfolien auf

Behältern aus schlagzähem Polystyrol, in der Regel Extrusions-Polystyrol, z.B. Vestyron® 638 gesiegelt. Häufig enthalten die für die Behälter eingesetzten schlagzähen Polystyrole weiteres glasklares Polystyrol, beispielsweise kann ein Behälter aus einer Mischung Vestyron® 638 und Vestyron® 224 (beides Produkte der Fa. Hüls AG) hergestellt werden.

- die Folien können auf den üblichen, für das Heißsiegeln verwendeten Anlagen gesiegelt werden (beispielsweise: Siegeldruck < 2 bar, Zeitbedarf 0,1 bis 2 sec., Siegeltemperatur 130 bis 220 Grad C).

Vorzugsweise kommen Siegelköpfe mit einer Teflon- oder einer anderen das Blocken verhindernden Beschichtung zur Anwendung. Sofern die Siegelfolie selbst mit einem nichtblockenden Schlußlack versehen ist oder aber eine Antiblockschicht Z aufweist, kann auch mit metallischen Siegelköpfen z.B. aus Aluminium gearbeitet werden.

Die erfindungsgemäße Folie läßt sich so einstellen, daß Stanzabfälle oder andere Folienreste als Ganzes zum Herstellen einer neuen Kunststoff-Folie KF oder auch einer neuen Trägerfolie T verwendet werden können, wobei im letzteren Fall lediglich neues Material für die Siegelschicht verwendet werden muß, da T und S beliebig miteinander mischbar sind.

Es versteht sich von selbst, daß alle Bestandteile der Kunststoff-Folie KF, die mit Lebensmitteln in Berührung kommen können, nahezu vollständig frei sind von Restmonomeren und allen Bestandteilen, die den Gebrauchswert der Folie beeinträchtigen könnten.

Die folgenden Beispiele sollen die Erfindung erläutern.

## BEISPIELE

### Beispiel 1

Herstellung eines Copolymerisats P1 durch Substanzpolymerisation

Eine Mischung aus 500 g Methylmethacrylat, 500 g Butylmethacrylat und 10 g Dodecylmercaptan wird mit 1,5 g t-Butylperneodecanoat und 0,5 g t-Butylper-2-ethylhexanoat versetzt, in einem Kunststoffbeutel (Hostaphan®, Produkt der Fa. Hoechst AG) gefüllt und in einem Wasserbad 24 Stunden bei 45 Grad C und nachfolgend 10 Stunden bei 80 Grad C polymerisiert.

Der auf diesem Wege erhaltene Copolymerisatblock wird in einer Mühle gemahlen. Anschließend wird das Mahlkorn in einem Extruder granuliert und entgast.

Man erhält ein glasklares, sehr leicht fließendes Copolymerisat.

J = 23 ml/g.

### Beispiel 2

Herstellung eines Copolymerisat P2 durch Emulsionspolymerisation

In einem 100 l-Rührkessel wurde unter Schutzgas (Argon) 15 kg Methylmethacrylat, 15 kg Butylmethacrylat und 100 g 2-Ethylhexylthioglykolat in einer Lösung von 150 g Natrium-tetradecylsulfonat in 44 kg Wasser emulgiert, auf 30 Grad C erwärmt. Es werden 6 g einer 1 %igen Eisen-II-sulfat-Lösung und 15 g Ammoniumperoxodisulfat (gelöst in 1 000 g Wasser) zugesetzt und nachfolgend durch Zugabe von 3 g Natriumbisulfit (gelöst in 100 g Wasser) die Polymerisation gestartet. Wenn die Polymerisationstemperatur ihren Höhepunkt erreicht hat (ca. 70 Grad C), wird eine Stunde bei 70 Grad C weitergerührt, danach wird unter Rühren auf Raumtemperatur gekühlt.

### Beispiele 3 bis 8

Herstellung von Copolymerisaten P3 bis P8 durch Substanzpolymerisation

Man verfährt wie in Beispiel 1, wählt jedoch eine andere Monomerzusammensetzung:

500 g Ethylmethacrylat
500 g Butylmethacrylat

Als Regler wird Dodecylmercaptan eingesetzt, die Regler-Konzentration wird in Beispiel 3 bis Beispiel 8 variiert und damit der J-Wert verändert (siehe Tabelle 1).

| Beispiel Nr. | Einwaage Dodecylmercaptan (g) | J [ml/g] |
|---|---|---|
| 3 (P3) | 3 | 51 |
| 4 (P4) | 4 | 41 |
| 5 (P5) | 5 | 36 |
| 6 (P6) | 7 | 28 |
| 7 (P7) | 8 | 25 |
| 8 (P8) | 9 | 23 |

Man erhält in jedem Fall ein glasklares Polymerisat, das zu einem Pulver gemahlen wird.

Beispiel 9

Herstellung und Charakterisierung von zweiphasigen, heißsiegelbaren Kunststoff-Folien KF1 und KF2

Auf eine 250 µm dicke, schlagzähe Polystyrolfolie (Vestyron® 624-30 (Produkt der Fa. Hüls AG) mit 10 Gew.-% Zusatz Cariflex® TR 1102) wird mit Hilfe eines Rillenrakels ein 100 µm dicker Naßfilm einer Lösung von 10 g eines Methylmethacrylat-Butylmethacrylat-Copolymeren P1 gemäß Beispiel 1 in einer Mischung aus 79,5 % 2-Propanol, 20 % Aceton, 0,5 % 4-Hydroxy-4-methy-2-pentanon aufgetragen.
Es resultiert eine 260 µm dicke Kunststoff-Folie KF1 mit einer 10 µm dicken Siegelschicht.
Mit dieser Folie werden 1,5 cm breite Polystyrol-Streifen gesiegelt (Siegelfläche: 1,5 cm X 1,0 cm. Siegeldruck: 2,5 bar. In Abhängigkeit von Temperatur und Siegelzeit werden folgende Siegelergebnisse erzielt:

Siegeltemperatur: 220 Grad C
Siegelzeit: 0,5 sec., gute Siegelfestigkeit.

Ebenso wird eine 120 µm dicke schlagzähe Polystyrol-Folie (Vestyron® 624-30 mit 10 Gew.-% Zusatz Cariflex® TR 1102) wie oben beschrieben mit einer 10 µm dicken Schicht aus Copolymerisat P1 gemäß Beispiel 1 versehen. Es resultiert eine insgesamt 120 µm dicke Folie KF2, die aufgrund der geringen Dicke schon bei tiefen Temperaturen auf schlagzähes Polystyrol gesiegelt werden kann.

Siegeldruck: 2,5 bar
Siegeltemperatur: 180 Grad C, gute Siegelfestigkeit
(Abzugsfestigkeit: 6,8 N)

Beispiel 10

Das Copolymere aus 50 Teilen Ethylmethacrylat und 50 Teilen Butylmethacrylat (J = 23 ml/g) (= Copolymeres P8 gemäß Beispiel 8) wird in einer Mischung aus 80 % 2-Propanol, 15 % Aceton, 5 % 4-Hydroxy-4-methyl-2-pentanon gelöst und mit Hilfe eines Rillenrakels als 10 µm dicke Copolymerschicht auf eine 100 µm dicke Polystyrolfolie (Vestyron® 624-30 mit 10 Gew.-% Cariflex® TR TR 1102) aufgetragen (siehe auch Beispiel 9). Es resultiert eine 120 µm dicke Kunststoff-Folie, die bei 160 Grad C einen Druck von 2,5 bar innerhalb von 0,5 sec. auf einen Polystyrolstreifen (Siegelfläche 1,5 cm x 1,0 cm) mit guter Siegelfestigkeit gesiegelt werden kann.
(Abzugsfestigkeit ca. 6 N)

Beispiel 11

Auf eine 140 µm dicke Polystyrol-Copolymer-Blend-Folie als Trägermaterial (Zusammensetzung des Folienmaterials: 75 % K-Resin® KR05 (Produkt der Fa. Phillips Petroleum Co. Bartherville, OK 74004, USA) und 25 % des Copolymeren P3 gemäß Beispiel 3: Copolymeres aus 50 Gew.-% Ethylmethacrylat und 50 Gew.-% Butylmethacrylat, J = 51 ml/g) wird wie in Beispiel 9 beschrieben, eine 10 µm dicke Schicht eines Copolymeren P1 gemäß Beispiel 1 aufgetragen. Man erhält eine Verbundfolie, die bei 180 Grad C und 2,5 bar innerhalb von 0,5 sec. gesiegelt werden kann.

Beispiel 12

Herstellung eines schlagzäh modifizierten Copolymeren P9 durch 2-stufige Emulsionspolymerisation

In einem Polymerisationskessel, ausgestattet mit Rührer, Thermometer und Rückflußkühler werden gemäß US-PS 4 613 118 mit 0,3 % Na-Salz der Tetradecansulfonsäure nacheinander die folgenden Monomeremulsionen in Wasser dosiert,

| | |
|---|---|
| 200 g | einer Mischung aus 99,4 % Methylmethacrylat und 0,6 % Allylmethacrylat |
| 400 g | einer Mischung aus 98 % Butylacrylat und 2 % Allylmethacrylat zu und schließlich |
| 400 g | einer Mischung aus 49,5 % Ethylmethacrylat und 49,5 % Butylmethacrylat sowie 1 % Dodecylmercaptan |

und so ein dreiphasiges Emulsionspolymerisat dargestellt.

Nach dem Abkühlen resultiert eine Dispersion mit einem Feststoffgehalt von 50 %. Die Dispersionsteilchen haben einen mittleren Durchmesser von 398 nm.

Zur Gewinnung des Polymerisat-Feststoffswird die Dispersion gefrierkoaguliert durch Einfrieren bei -16 Grad C und Auftauen in warmem Wasser. Nach Waschen, Abfiltrieren und Trocknen resultiert ein Feststoff, der bei 200 Grad C in einem Meßkneter (Haake Rheodive 5000) verarbeitet werden kann (Drehmoment: 4,0 Nm).

Beispiel 13

Herstellen einer coextrudierbaren Siegelmasse S1

750 g des gemäß Beispiel 12 erhaltenen schlagzäh modifizierten Copolymeren P9 wird mit 250 g des niedermolekularen Copolymeren P6 gemäß Beispiel 6 gemischt, gemeinsam granuliert und entgast.
Die auf diesem Wege erhaltene Siegelmasse S fließt deutlich leichter als die Siegelmasse gemäß Beispiel 12. So findet man bei 200 Grad C einen Drehmoment von 2,2 Nm.

Beispiel 14

Herstellen einer coextrudierten Siegelmasse S2

Mischt man 50 Teile der gemäß Beispiel 12 erhaltenen mehrstufigen Emulsionspolymerisate P9 mit 50 Teilen des niedermolekularen Copolymeren gemäß Beispiel 6, so erhält man eine noch leichter fließende Siegelmasse (Drehmoment bei 200 Grad C: 0,6 Nm).

Beispiel 15

Herstellung einer zweischichtigen Siegelfolie durch Coextrusion

In einer Coextrusionsanlage wird eine 10 - 20 µm dicke Schicht der coextrudierbaren Siegelmasse S2 gemäß Beispiel 14 auf eine 200 µm dicke Schicht eines schlagzähen Polystyrols (Abmischung aus 90 Teilen Vestyron® 624-30 mit 10 Teilen Cariflex® TR 1102) hergestellt.

| | |
|---|---|
| Produktabmessungen: | Länge: 50 m Wickel |
| | Breite: 120 mm |
| | Dicke: 210 - 220 µm |

Hauptextruder (Material: Abmischung aus 90 Teilen Vestyron® 624-30 und 10 Teilen Cariflex® TR 1102)

Temperatur: 200 Grad C (Düse)

Coextruder (Material: Coextrusionsmasse gemäß Beispiel 14)

| | |
|---|---|
| Temperatur: | 220 Grad C (Düse) |
| Abzugsgeschwindigkeit: | 1,8 m/min |

Man erhält ein gleichmäßiges Coextrudat mit einer sehr gleichmäßigen Verteilung der Siegelmasse S auf der

Trägermasse Polystyrol.

Beispiel 16

Herstellung einer zweischichtigen Siegelfolie durch Coextrusion

Man verfährt wie in Beispiel 15, wählt jedoch andere Schichtdicken. Die der Gesamtfolie: 300 µm, Dicke der Siegelschicht S: 40 - 60 µm.

Beispiel 17

Heißsiegelversuche mit den Siegelfolien gemäß den Beispielen 15 und 16

Die Folie gemäß Beispiel 15 wird in Form eines Joghurt-Becher-Deckels ausgestanzt und auf einen Joghurt-Becher aus schlagzähem Polystyrol (300 ml, Durchmesser 75 mm) aufgesiegelt. Für ein dichtes Verschließen des Bechers (0,75 bar) in 0,5 sec. ist eine Siegeltemperatur von 160 Grad C erforderlich.

Demgegenüber ist bei Einsatz der dickeren Folie gemäß Beispiel 16 unter diesen Siegelbedingungen eine Siegeltemperatur von 180 Grad C erforderlich.

Beispiel 18

Herstellen einer Siegelmasse S3

50 Gew.-Teile Cariflex® TR TR 1102 und 50 Gew.-Teile des Copolymeren P1 gemäß Beispiel 1 werden bei 190 Grad C gemischt. Man findet ein Drehmoment von 3,0 Nm.

Beispiel 19

Herstellung einer Zweischicht-Folie mit verbessertem Abzugsverhalten nach Siegelung auf schlagzähes Styrol.

Die gemäß Beispiel 18 erhaltene Siegelmasse S3 wird bei 200 Grad C zu einer 60 - 70 um dicken Folie verpreßt.

Anschließend werden die so erhaltenen Folien auf 130 µm dicke Folien aus schlagzähem Polystyrol (Vestyron® 624-30 mit 10 % Cariflex® TR TR 1102) aufgepreßt. Man erhält eine gut handhabbare Zweischicht-Folie.

Mit dieser Folie werden 1,5 cm breite Polystyrol-Streifen gesiegelt (Siegelfläche 1,5 cm x 1,0 cm), Siegeldruck: 2,5 bar. Bei einer Siegeltemperatur von 180 Grad C erhält man bei einer Siegeldauer von 0,5 sec. eine gute Siegelung. Besonders hervorzuheben ist das gute Abzugsverhalten (Peeling) beim Wiederöffnen der Versiegelung.

Beispiel 20

Herstellen einer Zweischicht-Folie mit verbessertem Abzugsverhalten nach Siegelung auf schlagzähem Polystyrol

30 Gew.-Teile Cariflex® TR 1102 und 70 Gew.Teile des Copolymeren P5 gemäß Beispiel 5 werden in einem Kneter bei 191 Grad C gemischt. Drehmoment: 0,9 Nm. Wie in Beispiel 19 beschreiben, wird diese leicht fließende Mischung bei 190 Grad C zu einer 120 µm dicken Folie gepreßt.

Anschließend wird eine 130 µm dicke Folie aus schlagzähem Polystyrol (Vestyron® 624-30 und 10 % Cariflex® TR 1102) aufgepreßt. Man erhält eine gut handhabbare Zweischichtfolie, die auf schlagzähes Polystyrol gesiegelt werden kann. Auch diese Versiegelung zeigt beim Öffnen ein gutes, weiches, elastisches Abzugsverhalten.

Beispiel 21

Herstellung einer Zweischicht-Folie

In einer Coextrusionsanlage gemäß Beispiel 15 wird auf ein Polystyrol Blockcopolymeres (K-Resin® KK38) als Trägermaterial T eine Siegelmassenmischung S4 aufgebaut aus

| | |
|---|---|
| 30 Gew.-% | Cariflex® TR 1102 |
| 50 Gew.-% | Copolymeres gemäß Beispiel 1 (mit erhöhtem J-Wert = 25 ml/g) und |
| 20 Gew.-% | K-Resin® KK38 (Produkt der Phillips Petroleum) |

coextrudiert. Dicke der Coextrusionsschicht: 20 µm, Gesamtdicke der Folie: 280 µm.
Aus dieser Folie werden Dickel gestanzt. Diese Deckel werden mit einem Druck von 0,8 bar bei 180 Grad C in 0,5 secl. auf einen 200 ml Polystyrol-Becher (Durchmesser: 75 mm) gesiegelt. Der Becher ist gut versiegelt. Bei Öffnen zeigt auch diese Versiegelung ein weiches, elastisches Abzugsverhalten.

**Patentansprüche**

1. Heißsiegelfähige Kunststoff-Folien KF, aufgebaut aus wenigstens zwei aufeinander haftenden Schichten, enthaltend eine Trägerschicht T aus einem schlagzähen, aus einer zweiphasigen Polymermischung bestehenden Polystyrolharz PS,
   dadurch gekennzeichnet, daß auf der Trägerschicht T eine Siegelschicht S haftet, aufgebaut aus 20 bis 100 Gew.-% eines Copolymerisats P, bestehend aus

   p1) 20 bis 90 Gew.-% Methylmethacrylat und/oder Ethylmethacrylat,

   p2) 10 bis 80 Gew.-% mindestens eines Monomeren der Formel:

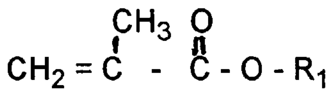 (I)

   worin $R_1$ für einen Alkylrest mit mindestens 2 Kohlenstoffatomen mehr als bei p1) und bis 24 Kohlenstoffatomen steht,

   p3) 0 bis 10 Gew.-% eines oder mehrerer mit den Monomeren p1) und p2) copolymerisierbaren Monomeren, das sich von den Monomeren p1) und p2) unterscheidet,

   wobei sich die Monomere p1), p2) und p3) zu 100 Gew.-% ergänzen und sich der Anteil des Monomeren p2) nach der Regel richtet, daß mit steigender Anzahl der Kohlenstoffatome in $R_1$ der relative Anteil des Monomeren p2) abnehmen soll.

2. Heißsiegelfähige Kunststoff-Folien KF gemäß Anspruch 1, dadurch gekennzeichnet, daß das schlagzähe Polystyrolharz PS aufgebaut ist aus Styrol-Butadien-Multiblockcopolymeren mit einem Gehalt an Polybutadien von mehr als 50 Gew.-%, aus Styrol-Butadien-Multiblockcopolymeren mit einem Gehalt an Polybutadien von 15 - 50 Gew.-%, oder durch radikalische Polymerisation hergestellte, schlagzäh modifizierte Polystyrole oder aus Mischungen der genannten Polymerisate untereinander oder mit glasklarem Polystyrol.

3. Heißsiegelfähige Kunststoff-Folien KF gemäß den Ansprüchen 1 und 2, dadurch gekennzeichnet, daß das schlagzähe Polystyrolharz PS aufgebaut ist aus 40 - 100 Gew.-% eines Blockcopolymeren BC bestehend aus:

   A) 15 bis 85 Gew.-% Styrol und
   B) 85 bis 15 Gew.-% Butadien und/oder Isopren

4. Heißsiegelfähige Kunststoff-Folien KF gemäß den Ansprüchen 1 bis 3, dadurch gekennzeichnet, daß das Copolymerisat P Elastomerphasen in Anteilen von 1 bis 65 Gew.-% enthält, die mit Pfropfästen versehen sind, deren Zusammensetzung dem Copolymerisat P entspricht.

5. Heißsiegelfähige Kunststoff-Folien KF gemäß den Ansprüchen 1 bis 4, dadurch gekennzeichnet, daß die Trägerschicht T 0,1 bis 50 Gew.-% bezogen auf die gesamte Trägerschicht T, an Copolymerisat P enthält.

6. Heißsiegelfähige Kunststoff-Folien KF gemäß den Ansprüchen 1 bis 5, dadurch gekennzeichnet, daß die Siegelschicht S 0,1 bis 80 Gew.-%, bezogen auf die gesamte Siegelschicht S, an schlagzähem Polystyrolharz PS enthält.

7. Heißsiegelfähige Kunststoff-Folien KF gemäß den Ansprüchen 1 bis 6, dadurch gekennzeichnet, daß die Siegelschicht S aufgebaut ist aus wenigstens den drei Komponenten

| | |
|---|---|
| 45 - 65 Gew.-% | des Copolymeren P |
| 10 - 35 Gew.-% | eines Blockcopolymeren mit einem Gehalt an Polybutadien von mehr als 50 Gew.-% |
| und10 - 35 Gew.-% | eines Blockcopolymeren mit einem Gehalt an Polybutadien von 15 bis 50 Gew.-%. |

**8.** Heißsiegelfähige Kunststoff-Folien KF gemäß den Ansprüchen 1 bis 7, dadurch gekennzeichnet, daß die Gesamtdicke der Kunststoff-Folien KF maximal 500 µm beträgt.

**9.** Heißsiegelfähige Kunststoff-Folien gemäß den Ansprüchen 1 bis 8, dadurch gekennzeichnet, daß die Trägerschicht T eine Dicke zwischen 5 und 495 µm und die auf der Trägerschicht haftende Siegelschicht S eine Dicke zwischen 2 und 495 µm bei einer Gesamtdicke der Folie zwischen 80 und 500 µm aufweisen.

**10.** Heißsiegelfähige Kunststoff-Folien gemäß den Ansprüchen 1 bis 9, dadurch gekennzeichnet, daß die Kunststoff-Folien KF mit einer zusätzlichen Schicht Z, die das Ankleben der Kunststoff-Folie KF am Siegelkopf verhindert, belegt ist.

**11.** Heißsiegelfähige Kunststoff-Folie gemäß Anspruch 10, dadurch gekennzeichnet, daß die zusätzliche Schicht Z aus einem Kunststoff aufgebaut ist, der einen Erweichungspunkt über 160 Grad C aufweist.

**12.** Kunststoff-Verbund aus den heißsiegelfähigen Kunststoff-Folien KF gemäß den Ansprüchen 1 - 11.

**13.** Verwendung der heißsiegelfähigen Kunststoff-Folien KF gemäß den Ansprüchen 1 bis 11 zum Verschließen von Behältern aus (schlagzähem) Polystyrol.

**Claims**

**1.** Heat-sealable plastic sheets KF, synthesised from at least two layers adhering to each other and comprising a substrate layer T that is made of an impact-resistant polystyrene resin PS comprising a two-phase polymer mixture, characterised in that a sealing layer S adheres to the substrate layer T and is synthesised from 20 to 100 wt.% of a copolymer P comprising

p1) 20 to 90 wt.% of methyl methacrylate and/or ethyl methacrylate,

p2) 10 to 80 wt.% of at least one monomer of formula:

$$CH_2 = \overset{\overset{\displaystyle CH_3}{|}}{C} - \overset{\overset{\displaystyle O}{\|}}{C} - O - R_1 \qquad (I)$$

wherein $R_1$ is an alkyl group having at least 2 more carbon atoms than in p1) and up to 24 carbon atoms,

p3) 0 to 10 wt.% of one more monomers copolymerisable with the monomers p1) and p2) but different from monomers p1) and p2),

the monomers p1), p2) and p3) making up 100 wt.% and the amount of the monomer p2) being determined according to the rule that the relative amount of the monomer p2) decreases as the number of carbon atoms in $R_1$ increases.

**2.** Heat-sealable plastic sheets KF according to claim 1, characterised in that the impact-resistant polystyrene resin PS is synthesised from styrenebutadiene-multiblock copolymers comprising more than 50 wt.% of polybutadiene, from styrene-butadiene multiblock copolymers comprising 15 to 50 wt.% of polybutadiene, or from impact resistance-modified polystyrenes prepared by radical polymerisation, or from mixtures of the above polymers combined with one another or with glass-clear polystyrene.

**3.** Heat-sealable plastic sheets KF according to claims 1 and 2, characterised in that the impact-resistant polystyrene resin PS is synthesised from 40 - 100 wt.% of a block copolymer BC comprising:

A) 15 to 85 wt.% of styrene and
B) 85 to 15 wt.% of butadiene and/or isoprene

**4.** Heat-sealable plastic sheets KF according to claims 1 to 3, characterised in that the copolymer P comprises elastomer phases in amounts of 1 to 65 wt.%, the elastomer phases having graft branches, the composition of which corresponds to that of the copolymer P.

**5.** Heat-sealable plastic sheets KF according to claims 1 to 4, characterised in that the substrate layer T comprises 0.1 to 50 wt.% of copolymer P, based on the total substrate layer T.

**6.** Heat-sealable plastic sheets KF according to claims 1 to 5, characterised in that the sealing layer S comprises 0.1 to 80 wt.% of impact-resistant polystyrene resin PS, based on the total sealing layer S.

**7.** Heat-sealable plastic sheets KF according to claims 1 to 6, characterised in that the sealing layer S is synthesised from at least the three components as follows

| | |
|---|---|
| 45 - 65 wt.% | of the copolymer P |
| 10 - 35 wt.% | of a block copolymer comprising more than 50 wt.% of polybutadiene |
| and 10 - 35 wt.% | of a block copolymer comprising 15 to 50 wt.% of polybutadiene. |

**8.** Heat-sealable plastic sheets KF according to claims 1 to 7, characterised in that the total maximum thickness of the plastic sheets KF is 500 µm.

**9.** Heat-sealable plastic sheets according to claims 1 to 8, characterised in that the substrate layer T has a thickness between 5 and 495 µm and the sealing layer S adhering to the substrate layer has a thickness between 2 and 495 µm, the total thickness of the sheet being between 80 and 500 µm.

**10.** Heat-sealable plastic sheets according to claims 1 to 9, characterised in that the plastic sheets KF are covered by an additional layer Z, which prevents the plastic sheet KF from adhering to the sealing head.

**11.** Heat-sealable plastic sheet according to claim 10, characterised in that the additional layer Z is made of a plastic material which has a softening point above 160°C.

**12.** A composite plastic material comprising heat-sealable plastic sheets KF according to claims 1 to 11.

**13.** Use of the heat-sealable plastic sheets KF according to claims 1 to 11 for closing containers made of (impact-resistant) polystyrene.

**Revendications**

**1.** Feuilles plastiques KF thermoscellables, constituées d'au moins deux couches qui adhèrent l'une à l'autre, contenant une couche support T, constituée d'une résine de polystyrène PS anti-choc, constituée d'un mélange diphasique de polymères, caractérisées en ce qu'à la couche support T adhère une couche thermoscellable S, constituée de 20 à 100 % en poids d'un copolymère P, lui-même constitué

p1) de 20 à 90 % en poids de méthacrylate de méthyle et/ou de méthacrylate d'éthyle,
p2) de 10 à 80 % en poids d'au moins un monomère de formule :

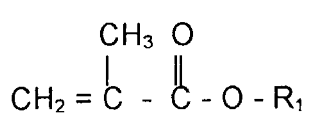 (I)

où $R_1$ est un radical alkyle ayant au moins 2 atomes de carbone de plus que p1), et ayant jusqu'à 24 atomes

de carbone,
p3) de 0 à 10 % en poids d'un ou plusieurs monomères copolymérisables avec les monomères p1) et p2), et qui sont différents des monomères p1) et p2),

où la somme des monomères p1), p2) et p3) est de 100 % en poids, et la proportion du monomère p2) est définie par la règle selon laquelle la proportion relative du monomère p2) doit diminuer quand augmente le nombre des atomes de carbone de $R_1$.

**2.** Feuilles plastiques KF thermoscellables selon la revendication 1, caractérisées en ce que la résine de polystyrène PS anti-choc est constituée de copolymères multiséquencés styrène-butadiène ayant une teneur en polybutadiène supérieure à 50 % en poids, de copolymères multiséquencés styrène-butadiène ayant une teneur en polybutadiène de 15 à 50 % en poids, ou encore de polystyrènes modifiés anti-choc, préparés par polymérisation radicalaire, ou encore de mélanges des polymères ci-dessus les uns avec les autres ou avec du polystyrène transparent.

**3.** Feuilles plastiques KF thermoscellables selon les revendications 1 et 2, caractérisées en ce que la résine de polystyrène PS anti-choc est constituée de 40 à 100 % en poids d'un copolymère séquencé BC constitué

A) de 15 à 85 % de styrène, et
B) de 85 à 15 % de butadiène et/ou d'isoprène.

**4.** Feuilles plastiques KF thermoscellables selon les revendications 1 à 3, caractérisées en ce que le copolymère P contient des phases élastomères en des proportions de 1 à 65 % en poids, qui sont pourvues de greffons dont la composition correspond à celle du copolymère P.

**5.** Feuilles plastiques KF thermoscellables selon les revendications 1 à 4, caractérisées en ce que la couche support T contient de 0,1 à 50 % en poids de copolymère P par rapport à la totalité de la couche support T.

**6.** Feuilles plastiques KF thermoscellables selon les revendications 1 à 5, caractérisées en ce que la couche scellable S contient de 0,1 à 80 % en poids, par rapport à la totalité de la couche scellable S, d'une résine de polystyrène PS anti-choc.

**7.** Feuilles plastiques KF thermoscellables selon les revendications 1 à 6, caractérisées en ce que la couche scellable S est constituée au moins des trois constituants suivants :

45 à 65 % en poids du copolymère P,
10 à 35 % en poids d'un copolymère séquencé ayant une teneur en polybutadiène supérieure à 50 % en poids, et
de 10 à 35 % en poids d'un copolymère séquencé ayant une teneur en polybutadiène de 15 à 50 % en poids.

**8.** Feuilles plastiques KF thermoscellables selon les revendications 1 à 7, caractérisées en ce que l'épaisseur totale des feuilles plastiques KF est au maximum de 500 µm.

**9.** Feuilles plastiques thermoscellables selon les revendications 1 à 8, caractérisées en ce que la couche support T a une épaisseur de 5 à 495 µm, et la couche scellable S qui adhère à la couche support a une épaisseur de 2 à 495 µm pour une épaisseur totale de la feuille de 80 à 500 µm.

**10.** Feuilles plastiques thermoscellables selon les revendications 1 à 9, caractérisées en ce que les feuilles plastiques KF sont pourvues d'une couche supplémentaire Z, qui empêche que la feuille plastique KF n'adhère à la tête de thermoscellage.

**11.** Feuille plastique thermoscellable selon la revendication 10, caractérisée en ce que la couche supplémentaire Z est constituée d'un matériau plastique ayant un point de ramollissement supérieur à 160°C.

**12.** Composite plastique constitué des feuilles plastiques KF thermoscellables selon les revendications 1 à 11.

**13.** Utilisation des feuilles plastiques KF thermoscellables selon les revendications 1 à 11 pour obturer des récipients en polystyrène (anti-choc).